# EUROPÄISCHE PATENTSCHRIFT

(11) **EP 2 459 893 B1**
(45) Veröffentlichungstag und Bekanntmachung des Hinweises auf die Patenterteilung: **25.09.2013**
(21) Anmeldenummer: 10730442.0
(22) Anmeldetag: 02.07.2010
(51) Int. Cl.: F16C 33/78, F16F 15/315

(54) **WÄLZLAGER, INSBESONDERE EINREIHIGES RILLENKUGELLAGER FÜR EIN ZWEIMASSENSCHWUNGRAD IN EINEM KRAFTFAHRZEUG**
ROLLING BEARING, PARTICULARLY SINGLE-ROW DEEP GROOVE BALL BEARING FOR A DUAL MASS FLYWHEEL IN A MOTOR VEHICLE
ROULEMENT À BILLES, EN PARTICULIER ROULEMENT RAINURÉ À BILLES, À UNE RANGÉE DE BILLES, POUR UN VOLANT À DEUX MASSES DANS UN VÉHICULE AUTOMOBILE

(30) Priorität: 25.07.2009 DE 102009034798
(43) Veröffentlichungstag der Anmeldung: 06.06.2012
(73) Patentinhaber: Schaeffler Technologies AG & Co. KG, 91074 Herzogenaurach (DE)
(72) Erfinder: WINKELMANN, Ludwig, 91056 Erlangen (DE)
(86) Internationale Anmeldenummer: PCT/EP2010/059433
(87) Internationale Veröffentlichungsnummer: WO 2011/012401

(56) Entgegenhaltungen:
- WO-A1-98/06957
- DE-A1- 19 631 725
- DE-A1-102005 008 006
- FR-A- 1 383 004
- US-A- 4 984 908
- US-A- 5 310 267
- US-A1- 2004 020 743

## Beschreibung

### Gebiet der Erfindung

Die Erfindung betrifft ein als einreihiges Rillenkugellager ausgebildetes Wälzlager nach den oberbegriffsbildenden Merkmalen des Patentanspruchs 1, welches insbesondere vorteilhaft zur Lagerung der Sekundärmasse auf der Primärmasse eines Zweimassenschwungrades in einem Kraftfahrzeug anwendbar ist.

### Hintergrund der Erfindung

Bekanntermaßen sind Zweimassenschwungräder zwischen dem Verbrennungsmotor und dem Getriebe eines Kraftfahrzeuges angeordnet und zur Erhöhung des Fahrkomforts vorgesehen. Ein solches Zweimassenschwungrad besteht im Wesentlichen aus einer direkt mit der Kurbelwelle des Verbrennungsmotors verbundenen scheibenförmigen Primärmasse und aus einer koaxial zu dieser Primärmasse angeordneten scheibenförmigen Sekundärmasse, die über eine Kupplung mit der Eingangswelle des Getriebes verbunden ist. Beide Massen sind dabei durch mehrere zwischen diesen angeordnete Dämpfungsmittel in Form von üblicherweise zwei einander gegenüberliegenden, gebogenen Spiraldruckfedern miteinander gekoppelt und entgegen der Wirkung dieser Dämpfungsmittel über eine auf einem Lagerflansch an der Primärmasse angeordnete reibungsmindernde Lagerung relativ zueinander verdrehbar. Beim Betrieb des Kraftfahrzeugs wird über die drehende Kurbelwelle des Verbrennungsmotors die Primärmasse aktiv angetrieben, während über die Dämpfungselemente die ihrerseits die Getriebeeingangswelle antreibende Sekundärmasse mitgenommen wird. Über die Dämpfungselemente werden dabei zum einen die aus Unwuchten der bewegten Massen im Antriebsstrang resultierenden Ungleichmäßigkeiten und zum anderen die aus den Kolbenbewegungen resultierenden Drehungleichförmigkeiten des Verbrennungsmotors gedämpft.

Da die Lagerung zwischen der Sekundärmasse und der Primärmasse des Zweimassenschwungrades vor allem durch Temperatureinflüsse von der Kupplung her einem besonders hohen Verschleiß unterliegt, wird diese üblicherweise durch spezielle Rillenkugellager in Form sogenannter DFC-Lager gebildet, wie sie beispielsweise aus der DE 42 14 655 A1 und aus der DE 196 31 725 A1 bekannt sind. Diese Rillenkugellager bestehen bekanntermaßen aus einem inneren Lagerring und aus einem äußeren Lagerring sowie aus einer Vielzahl zwischen diesen Lagerringen angeordneter Lagerkugeln, die in rillenförmigen Laufbahnen in der Außenmantelfläche des inneren Lagerrings und in der Innenmantelfläche des äußeren Lagerrings abrollen und durch einen Lagerkäfig in Umfangsrichtung in gleichmäßigen Abständen zueinander gehalten werden. Da für Rillenkugellager in Zweimassenschwungrädern keine Nachschmiermöglichkeiten vorgesehen sind, ist somit deren Lebensdauer von der Größe des vorhandenen Schmierstoffdepots abhängig. Zur Befüllung des Innenraums dieser Rillenkugellager mit einer für deren gesamte Lebensdauer ausreichenden Schmierstoffmenge weisen diese deshalb einseitig spezielle Kunststoff-Dichtkappen auf, die den äußeren Lagerring und den inneren Lagerring über- bzw. untergreifen und mit einem zusätzlichen axialen Hohlraum ausgebildet sind, durch den das Volumen des Lagerinnenraumes um ein Vielfaches erhöht wird.

Derartige Kunststoff-Dichtkappen an den Rillenkugellagern von Zweimassenschwungrädern sind jedoch relativ aufwändig in ihrer Herstellung sowie empfindlich bei der Lagermontage und haben sich in der Praxis zudem dahingehend als nachteilig erwiesen, dass deren schleifend an der Innenmantelfläche des inneren Lagerrings anliegender Dichtungskragen eine hohe Vorspannung und eine relativ geringe Elastizität aufweist, durch die ein hohes Reibmoment zwischen diesem und dem inneren Lagerring entsteht. Dieses hohe Reibmoment ist dabei ursächlich für einen nahezu vollständigen vorzeitigen Verschleiß dieses Dichtungskragens, so dass es nachfolgend durch die fehlende Überdeckung dieses Dichtungsbereiches zu Schmierstoff-Leckagen über den angrenzenden Dichtungsspalt zwischen der Kunststoff-Dichtkappe und dem inneren Lagerring sowie zu einer Lebensdauerverkürzung des Rillenkugellagers kommt.

Zur Vermeidung dieser Nachteile wurde deshalb durch die zum Anmeldezeitpunkt der vorliegenden Patentanmeldung noch nicht veröffentlichte deutsche Patentanmeldung mit dem amtlichen Aktenzeichen 10 2008 048 517.9 ein Wälzlager für ein Zweimassenschwungrad vorgeschlagen, welches im Wesentlichen den gleichen Aufbau wie die zuvor beschriebenen Rillenkugellager aufweist, jedoch mit einer von den Standartabmessungen abweichenden weit größeren Axialbreite ausgebildet ist, um ein für eine Lebensdauerbefüllung mit Schmierstoff ausreichend großes Volumen des Innenraumes zwischen den Lagerringen zu erhalten. Der Innenraum des Wälzlagers wird dabei durch zwei einander axial gegenüberliegende und als metallarmierte Lippendichtringe ausgebildete kreisringförmige Dichtungen abgedichtet, die einerseits jeweils in eine Haltenut in der Innenmantelfläche des äußeren Lagerrings eingeschnappt sind und andererseits jeweils zwei an der Außenmantelfläche des inneren Lagerrings schleifend anliegende Dichtlippen aufweisen. Zusätzlich werden in diese Dichtungen in Höhe des Lagerteilkreises noch mehrere kleine Entlüftungsbohrungen eingearbeitet, über die das Wälzlager bei Überschreiten eines bei höheren Temperaturen durch Ausgasen des eingefüllten Schmierstoffes entstehenden zulässigen Gasdruckes in dessen Innenraum zwangsentlüftbar ist.

Nachteilig bei diesen Dichtungen für Rillenkugellager von Zweimassenschwungrädern ist jedoch, dass die Entlüftungsbohrungen nur durch aufwändiges Laser-bohren eingebracht werden können und somit die Anschaffung einer entsprechend kostenintensiven Laserbohreinrichtung sowie passender Aufnahmewerk-zeuge voraussetzen. Ebenso erfordert das Laserbohren weitere zusätzliche Ar-beitsschritte wie das Reinigen der Dichtringe nach dem Lasern der Entlüftungsbohrungen sowie eine Sichtkontrolle, so dass die Herstellungskosten derartiger Dichtungen sich in unwirtschaftlichen Bereichen bewegen. Zudem hat es sich in der Praxis erwiesen, dass derartige Entlüftungsbohrungen zu Verstopfungen durch Verschmutzungen oder durch Verharzung des Schmierstoffes neigen, so dass sie die ihnen zugedachte Funktion nicht mehr erfüllen können und es bei Überschreiten des zulässigen Gasdruckes im Innenraum des Lagers zum Auspressen des Schmierstoffes über die elastischen Dichtlippen der Dichtringe so-wie ebenfalls zu einer Lebensdauerverkürzung des Rillenkugellagers kommt.

### Aufgabe der Erfindung

Ausgehend von den dargelegten Nachteilen des bekannten Standes der Technik liegt der Erfindung deshalb die Aufgabe zu Grunde, ein Wälzlager, insbesondere einreihiges Rillenkugellager für ein Zweimassenschwungrad, zu konzipieren, welches mit verschleißfesten und kostengünstig herstellbaren Dichtungen versehen ist, die zugleich eine zuverlässige Entlüftung des Wälzlagers bei Überschreiten eines zulässigen Gasdruckes in dessen Innenraum gewährleisten.

### Beschreibung der Erfindung

Erfindungsgemäß wird diese Aufgabe bei einem Wälzlager nach dem Oberbegriff des Anspruchs 1 derart gelöst, dass zumindest eine der beiden Dichtungen als winkelprofilförmige Lippendichtung ausgebildet ist, deren formstabiler radialer Dichtungsschenkel am äußeren Lagerring befestigt sowie mit einer Axialseite des inneren Lagerrings eine Spaltdichtung bildend angeordnet ist und deren federelastische axiale Dichtlippe den inneren Lagerring untergreifend schleifend an dessen Innenmantelfläche anliegend angeordnet und zugleich als Überdruckventil ausgebildet ist, durch welches das Wälzlager bei Überschreiten eines zulässigen Gasdruckes in dessen Innenraum über die Spaltdichtung sowie über die dabei zumindest örtlich von der Innenmantelfläche des inneren Lagerrings abhebende Dichtlippe zwangsentlüftbar ist.

Bevorzugte Ausgestaltungen und vorteilhafte Weiterbildungen des erfindungsge-mäß ausgebildeten Wälzlagers werden in den Unteransprüchen beschrieben.

Danach ist es gemäß Anspruch 2 bei dem erfindungsgemäß ausgebildeten Wälzlager vorgesehen, dass bevorzugt nur die sekundärmassenseitige Dichtung als winkelprofilförmige Lippendichtung ausgebildet ist, während die primärmassenseitige Dichtung durch einen an sich bekannten Lippendichtring gebildet wird, der einerseits in eine Haltenut in der Innenmantelfläche des äußeren Lagerrings eingeschnappt ist und andererseits zwei an der Außenmantelfläche des inneren Lagerrings schleifend anliegende Dichtlippen aufweist. Eine solche Dichtungspaarung hat sich als besonders kostengünstig und als funktionell ausreichend erwiesen, da die bekannten Lippendichtungen eine optimale Abdichtung gegen den Austritt von Schmierstoff aus dem Lager bieten und zugleich den Eintritt von Verschmutzungen aus der nahegelegenen Kupplungsglocke in das Lager vermeiden. Denkbar wäre es jedoch auch, beide Dichtungen des Wälzlagers als winkelprofilförmige Lippendichtungen auszubilden.

Nach Anspruch 3 ist es ein weiteres Merkmal des erfindungsgemäß ausgebildeten Wälzlagers, dass der radiale Dichtungsschenkel der winkelprofilförmigen Lippendichtung durch eine Metallarmierung versteift ist und mit seiner freien Randpartie in eine weitere umlaufende Aufnahmenut in der Innenmantelfläche des äußeren Lagerrings einschnappbar ist. Die Metallarmierung sorgt dabei für die radiale Steifigkeit der ansonsten aus einem aufvulkanisierten Elastomer bestehenden Lippendichtung und gewährleistet, dass die zur Axialseite des inneren Lagerrings gebildete Spaltdichtung ein gleichmäßiges Spaltmaß aufweist.

Gemäß Anspruch 4 zeichnet sich das erfindungsgemäß ausgebildete Wälzlager darüber hinaus noch dadurch aus, dass der innere Lagerring gegenüber dem äußeren Lagerring eine um die Dicke des radialen Dichtungsschenkels der Lippendichtung sowie um das Spaltmaß der Spaltdichtung reduzierte Axialbreite aufweist. Dadurch ist gewährleistet, dass das Wälzlager bei eingesetzter Lippendichtung eine durchgehend einheitliche Axialbreite aufweist. Darüber hinaus ist der innere Lagerring mit einer etwa um die Länge der axialen Dichtlippe der Lippendichtung reduzierten Lagersitzbreite an dessen Innenmantelfläche ausgebildet, um den notwendigen Bauraumbedarf für die axiale Dichtlippe zu schaffen. Der mit der axialen Dichtlippe in Schleifkontakt stehende Teil der Innenmantelfläche des inneren Lagerrings kann dabei entweder den gleichen Durchmesser wie der Lagersitz aufweisen, so dass der Lagerflansch an der Primärmasse mit einem der Dicke dieser Dichtlippe entsprechenden Freistich auszubilden ist, oder die Innenmantelfläche des inneren Lagerrings wird mit einem solchen stufenförmigen Freistich versehen, so dass bei eingesetzter Lip-pendichtung die Unterseite der axialen Dichtlippe etwa das gleiche Niveau wie der Lagersitz aufweist.

Eine zweckmäßige Weiterbildung des erfindungsgemäß ausgebildeten Wälzlagers ist es nach Anspruch 5 desweiteren, dass der mit der axialen Dichtlippe der Lippendichtung in Schleifkontakt stehende Teil der Innenmantelfläche des inneren Lagerrings zusätzlich mit einer umlaufenden Nut und einer zur Axialseite des inneren Lagerrings verlaufenden Fase ausgebildet ist, um somit die Reibungsfläche der axialen Dichtlippe am inneren Lagerring zu reduzieren. Zwischen der umlaufenden Nut und der Fase entsteht somit eine etwa keilförmige Ringkontur an der Innenmantelfläche des inneren Lagerrings, an der die axiale Dichtlippe der Lippendichtung nur noch über einen reibungsarmen Linienkontakt zum inneren Lagerring anliegt. Die Elastizität der axialen Dichtlippe sowie unvermeidbare über die Spaltdichtung austretende Schmierstoffleckagen sorgen darüber hinaus dafür, dass die axiale Dichtlippe über die Lebensdauer des Wälzlagers nahezu keinen Verschleiß aufweist.

Schließlich wird es als vorteilhafte Variante des erfindungsgemäß ausgebildeten Wälzlagers durch die Ansprüche 6 und 7 noch vorgeschlagen, dass die Lippendichtung an der Innenseite ihres radialen Dichtungsschenkels eine zusätzliche Vordichtlippe aufweist und dass in die Außenmantelfläche des inneren Lagerrings unmittelbar vor der Vordichtlippe der Lippendichtung eine zusätzliche Schleudernut eingearbeitet ist. Die zusätzliche Vordichtlippe hat dabei einen etwa pultdachförmigen Profilquerschnitt und soll vermeiden, dass bei Lagerstillstand flüssiger bzw. niedrigviskoser Schmierstoff direkt in die Spaltdichtung zwischen diesem und der Axialseite des inneren Lagerrings abtropfen kann. Die Schleudernut in der Außenmantelfläche des inneren Lagerrings hat dagegen bevorzugt einen halbrunden Profilquerschnitt und bildet im Lagerbetrieb eine Abrisskante, die ein fliehkraftbedingtes Kriechen des Schmierstoffs in die Spaltdichtung vermeiden soll. Zusätzlich kann eine solche Schleudernut auch andererseits unmittelbar vor dem primärmassenseitigen Lippendichtring in die Außenmantelfläche des inneren Lagerrings eingearbeitet werden, um auch auf dieser Seite des Lagers eine Abrisskante gegen fliehkraftbedingtes Kriechen des Schmierstoffs unter den Dichtlippen hindurch zu bilden.

Zusammenfassend weist das erfindungsgemäß ausgebildete Rillenkugellager für ein Zweimassenschwungrad somit gegenüber den aus dem Stand der Technik bekannten Rillenkugellagern den Vorteil auf, dass es eine zugleich als Überdruckventil ausgebildete Lippendichtung aufweist, die trotz Schleifkontakt zum inneren Lagerring durch die Elastizität ihrer axialen Dichtlippe nahezu verschleißfrei ist und durch örtliches Abheben von der Innenmantelfläche des inneren Lagerrings eine zuverlässige Entlüftung des Wälzlagers bei Überschreiten eines zulässigen Gasdruckes in dessen Innenraum gewährleistet. Dadurch kann zugleich ein aufwändiges Einbringen einzelner von Verstopfungen bedrohter Entlüftungsbohrungen entfallen, so dass die Lippendichtung insgesamt äußerst kostengünstig herstellbar ist. Darüber hinaus besteht die Möglichkeit, durch unterschiedliche Dimensionierungen der axialen Dichtlippe der Lippendichtung den zulässigen Gasdruck im Innenraum des Wälzlagers in seiner Höhe entsprechend zu begrenzen. Ebenso kann die Lippendichtung einfach und sicher am Wälzlager ohne die Gefahr des Umstülpens von Dichtungslippen montiert werden und ermöglicht durch ihre äußere Sichtbarkeit zugleich eine sichere und lagerichtige Montage des Wälzlagers im Zweimassenschwungrad.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: einen Querschnitt durch eine Zweimassenschwungrad mit einem erfindungsgemäß ausgebildeten Wälzlager;
- Figur 2: eine vergrößerte Gesamtdarstellung eines erfindungsgemäß ausgebildeten Wälzlagers;
- Figur 3: eine vergrößerte Darstellung der Einzelheit X des erfindungsgemäß ausgebildeten Wälzlagers gemäß Figur 2;
- Figur 4: eine vergrößerte Darstellung der Einzelheit X gemäß Figur 2 mit einer Variante des erfindungsgemäß ausgebildeten Wälzlagers.

### Ausführliche Beschreibung der Zeichnungen

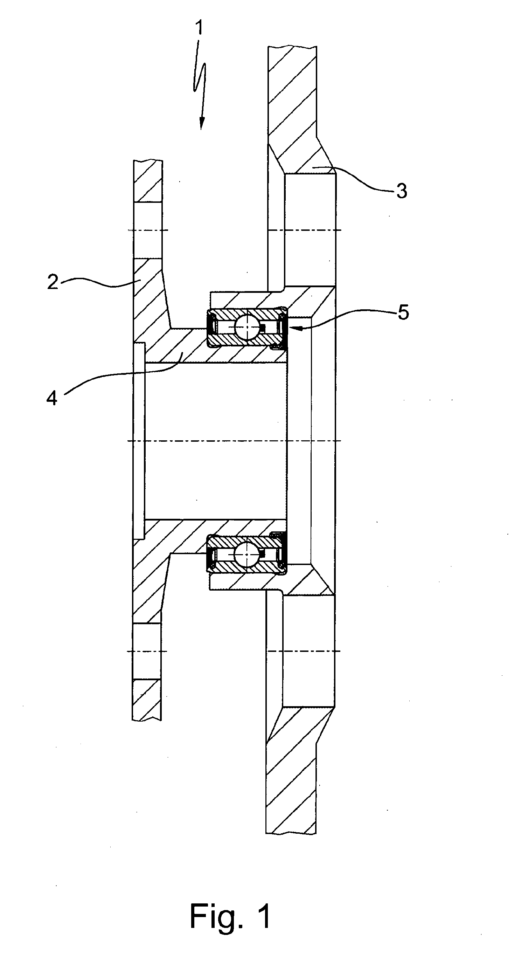

Aus Figur 1 geht eine schematische Darstellung eines Zweimassenschwungrades 1 für ein Kraftfahrzeug hervor, welches im Wesentlichen aus einer direkt mit der Kurbelwelle des Verbrennungsmotors verbundenen scheibenförmigen Primärmasse 2 und aus einer koaxial zu dieser Primärmasse 2 angeordneten scheibenförmigen Sekundärmasse 3 besteht, die über eine Kupplung mit der Eingangswelle des Getriebes verbunden ist. Beide Massen 2, 3 sind dabei durch mehrere zwischen diesen angeordnete jedoch nicht näher dargestellte Dämpfungsmittel miteinander gekoppelt und entgegen der Wirkung dieser Dämpfungsmittel über ein auf einem Lagerflansch 4 an der Primärmasse 2 angeordnetes Wälzlager 5 relativ zueinander verdrehbar.

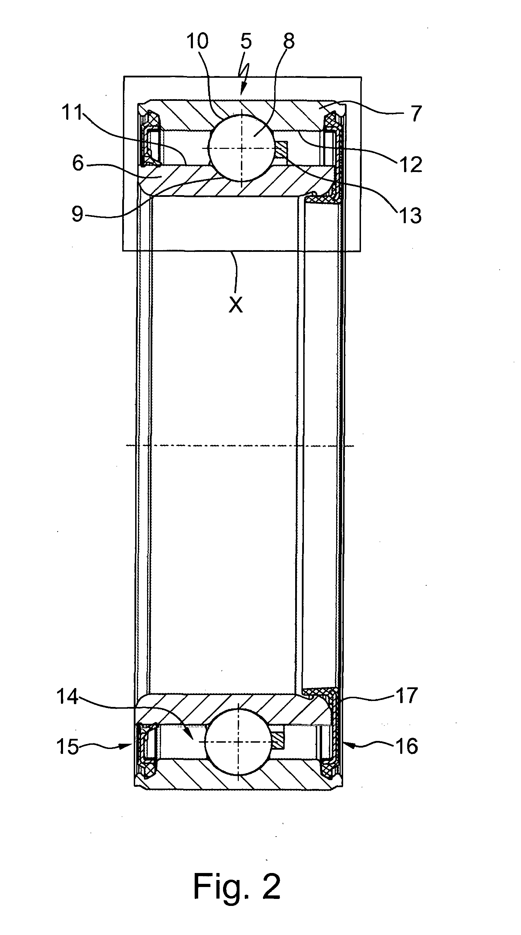

Durch Figur 2 wird desweiteren deutlich, dass das im Zweimassenschwungrad 1 angeordnete Wälzlager 5 im Wesentlichen aus einem inneren Lagerring 6 und aus einem koaxial zu diesem angeordneten äußeren Lagerring 7 sowie aus einer Vielzahl zwischen diesen Lagerringen 6, 7 angeordneter Lagerkugeln 8 besteht, die in rillenförmigen Laufbahnen 9, 10 in der Außenmantelfläche 11 des inneren Lagerrings 6 und in der Innenmantelfläche 12 des äußeren Lagerrings 7 abrollen und durch einen Lagerkäfig 13 in Umfangsrichtung in gleichmäßigen Abständen zueinander gehalten werden. Der Innenraum 14 des Wälzlagers 5 ist dabei durch zwei einander axial gegenüberliegende kreisringförmige Dichtungen 15, 16 abgedichtet und vollständig mit einem nicht näher dargestellten Wälzlager-Schmierstoff befüllt, dessen Menge für die gesamte Lagerlebensdauer ausgelegt ist.

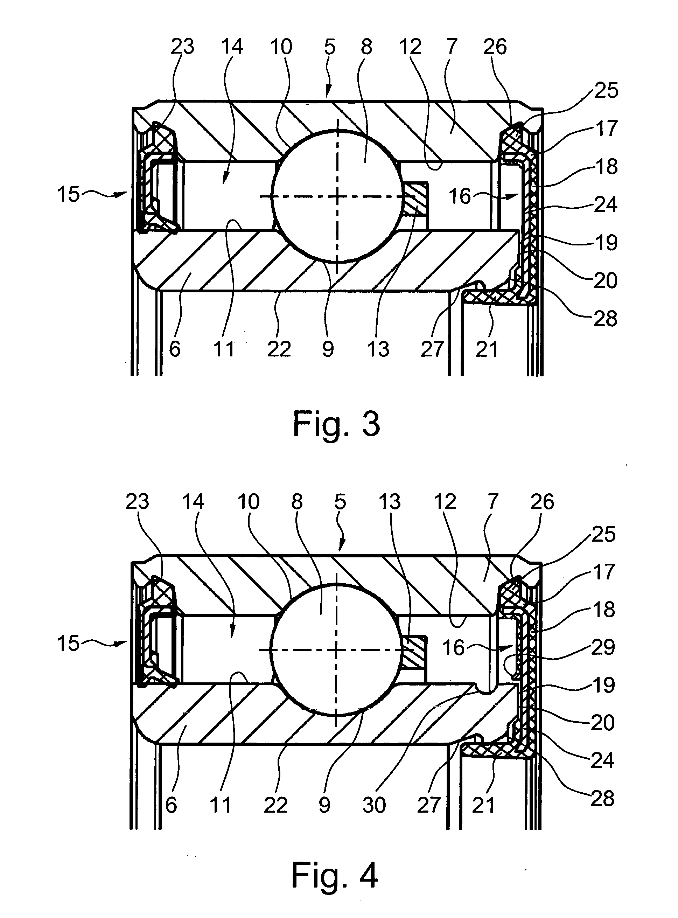

Aus Figur 3 ist darüber hinaus klar ersichtlich, dass die sekundärmassenseitige Dichtung 16 erfindungsgemäß als winkelprofilförmige Lippendichtung 17 ausgebildet ist, deren formstabiler radialer Dichtungsschenkel 18 am äußeren Lagerring 7 befestigt sowie mit einer Axialseite 19 des inneren Lagerrings 6 eine Spaltdichtung 20 bildet und deren federelastische axiale Dichtlippe 21 den inneren Lagerring 6 untergreift sowie schleifend an dessen Innenmantelfläche 22 anliegt. Die axiale Dichtlippe 21 ist dabei zugleich als Überdruckventil ausgebildet, durch welches das Wälzlager 5 bei Überschreiten eines durch Ausgasen des eingefüllten Schmierstoffes entstehenden zulässigen Gasdruckes in dessen Innenraum 14 über die Spaltdichtung 20 zwangsentlüftet wird, indem die Dichtlippe 21 dabei zumindest örtlich von der Innenmantelfläche 22 des inneren Lagerrings 6 abhebt. Die primärmassenseitige Dichtung 15 ist dagegen deutlich sichtbar als an sich bekannte Lippendichtung ausgebildet, die in einer umlaufenden Aufnahmenut 23 in der Innenmantelfläche 12 des äußeren Lagerrings 7 gehalten wird.

Desweiteren geht aus Figur 3 hervor, dass der radiale Dichtungsschenkel 18 der winkelprofilförmigen Lippendichtung 17 durch eine Metallarmierung 24 versteift ist und mit seiner freien Randpartie 25 in eine weitere umlaufende Aufnahmenut 26 in der Innenmantelfläche 12 des äußeren Lagerrings 7 eingeschnappt ist. Die Metallarmierung 24 sorgt dabei für die radiale Steifigkeit der ansonsten aus einem aufvulkanisierten Elastomer bestehenden Lippendichtung 17 und gewährleistet, dass die zur Axialseite 19 des inneren Lagerrings 6 gebildete Spaltdichtung 20 ein gleichmäßiges Spaltmaß aufweist.

Ebenso ist in Figur 3 zu sehen, dass der innere Lagerring 6 gegenüber dem äußeren Lagerring 7 eine etwa um die Dicke des radialen Dichtungsschenkels 18 der Lippendichtung 17 reduzierte Axialbreite sowie eine etwa um die Länge der axialen Dichtlippe 21 reduzierte Lagersitzbreite an dessen Innenmantelfläche 22 aufweist. Der mit der axialen Dichtlippe 21 in Schleifkontakt stehende Teil der Innenmantelfläche 22 des inneren Lagerrings 6 weist dabei den gleichen Durchmesser wie dessen nicht näher bezeichneter Lagersitz auf, so dass der Lagerflansch 4 an der Primärmasse 2, wie in Figur 1 angedeutet, mit einem der Dicke dieser Dichtlippe 21 entsprechenden Freistich ausgebildet ist.

Schließlich ist in Figur 3 noch erkennbar, dass der mit der axialen Dichtlippe 21 der Lippendichtung 17 in Schleifkontakt stehende Teil der Innenmantelfläche 22 des inneren Lagerrings 6 zusätzlich mit einer umlaufenden Nut 27 und einer zur Axialseite 19 des inneren Lagerrings 6 verlaufenden Fase 28 ausgebildet ist, um somit die Reibungsfläche der axialen Dichtlippe 21 am inneren Lagerring 6 zu reduzieren. Zwischen der umlaufenden Nut 27 und der Fase 28 entsteht somit eine etwa keilförmige Ringkontur an der Innenmantelfläche 22 des inneren Lagerrings 6, an der die axiale Dichtlippe 21 der Lippendichtung 17 nur noch über einen reibungsarmen Linienkontakt zum inneren Lagerring 6 anliegt.

In Figur 4 ist darüber hinaus noch eine vorteilhafte Variante des erfindungsgemäß ausgebildeten Wälzlagers 5 dargestellt, bei der die Lippendichtung 17 an der Innenseite ihres radialen Dichtungsschenkels 18 eine zusätzliche Vordichtlippe 29 mit pultdachförmigen Profilquerschnitt aufweist, mit welcher bei Lagerstillstand ein direktes Abtropfen flüssigen Schmierstoffs in die Spaltdichtung 20 zwischen diesem und der Axialseite 19 des inneren Lagerrings 6 vermeidbar ist. Außerdem ist bei dieser Variante in die Außenmantelfläche 11 des inneren Lagerrings 6 unmittelbar vor der Vordichtlippe 29 der Lippendichtung 17 noch eine zusätzliche Schleudernut 30 mit einem halbrunden Profilquerschnitt eingearbeitet, die im Lagerbetrieb eine Abrisskante gegen fliehkraftbedingt in die Spaltdichtung 20 kriechenden Schmierstoff bildet.

### Bezugszahlenliste

| | |
|---|---|
| 1 | Zweimassenschwungrad |
| 2 | Primärmasse |
| 3 | Sekundärmasse |
| 4 | Lagerflansch an 2 |
| 5 | Wälzlager |
| 6 | innerer Lagerring |
| 7 | äußerer Lagerring |
| 8 | Lagerkugeln |
| 9 | Laufbahn in 6 |
| 10 | Laufbahn in 7 |
| 11 | Außenmantelfläche von 6 |
| 12 | Innenmantelfläche von 7 |
| 13 | Lagerkäfig |
| 14 | Innenraum von 5 |
| 15 | Dichtung |
| 16 | Dichtung |
| 17 | Lippendichtung |
| 18 | radialer Dichtungsschenkel von 17 |
| 19 | Axialseite von 6 |
| 20 | Spaltdichtung |
| 21 | axiale Dichtlippe von 17 |
| 22 | Innenmantelfläche von 6 |
| 23 | Aufnahmenut in 12 |
| 24 | Metallarmierung von 18 |
| 25 | Randpartie von 18 |
| 26 | Aufnahmenut in 12 |
| 27 | Nut in 22 |
| 28 | Fase an 22 |
| 29 | Vordichtlippe an 18 |
| 30 | Schleudernut in 11 |

## Patentansprüche

1. Wälzlager, insbesondere einreihiges Rillenkugellager für ein Zweimassenschwungrad (1) in einem Kraftfahrzeug, welches Wälzlager (5) im Wesentlichen aus einem inneren Lagerring (6) und aus einem koaxial zu diesem angeordneten äußeren Lagerring (7) sowie aus einer Vielzahl zwischen diesen Lagerringen (6, 7) angeordneter Lagerkugeln (8) besteht, die in rillenförmigen Laufbahnen (9, 10) in der Außenmantelfläche (11) des inneren Lagerrings (6) und in der Innenmantelfläche (12) des äußeren Lagerrings (7) abrollen und durch einen Lagerkäfig (13) in Umfangsrichtung in gleichmäßigen Abständen zueinander gehalten werden, wobei der Innenraum (14) des Wälzlagers (5) durch zwei einander axial gegenüberliegende kreisringförmige Dichtungen (15, 16) abgedichtet ist sowie eine Lebensdauerbefüllung mit einem Wälzlager-Schmierstoff aufweist, wobei zumindest eine der beiden Dichtungen (15, 16) als winkelprofilförmige Lippendichtung (17) ausgebildet ist, deren formstabiler radialer Dichtungsschenkel (18) am äußeren Lagerring (7) befestigt sowie mit einer Axialseite (19) des inneren Lagerrings (6) eine Spaltdichtung (20) bildend angeordnet ist und deren federelastische axiale Dichtlippe (21) den inneren Lagerring (6) untergreifend schleifend an dessen Innenmantelfläche (22) anliegend angeordnet, **dadurch gekennzeichnet, dass** die federelastische axiale Dichtlippe zugleich als Überdruckventil ausgebildet ist, durch welches das Wälzlager (5) bei Überschreiten eines zulässigen Gasdruckes in dessen Innenraum (14) über die Spaltdichtung (20) sowie über die dabei zumindest örtlich von der Innenmantelfläche (22) des inneren Lagerrings (6) abhebende Dichtlippe (21) zwangsentlüftbar ist.

2. Wälzlager nach Anspruch 1, **dadurch gekennzeichnet, dass** nur eine Dichtung (16) als winkelprofilförmige Lippendichtung (17) ausgebildet ist, während die andere Dichtung (15) durch einen in einer umlaufenden Aufnahmenut (23) in der Innenmantelfläche (12) des äußeren Lagerrings (7) gehaltenen Lippendichtring gebildet wird.

3. Wälzlager nach Anspruch 2, **dadurch gekennzeichnet, dass** der radiale Dichtungsschenkel (18) der winkelprofilförmigen Lippendichtung (17) durch eine Metallarmierung (24) versteift ist und mit seiner freien Randpartie (25) in eine weitere umlaufende Aufnahmenut (26) in der Innenmantelfläche (12) des äußeren Lagerrings (7) einschnappbar ist.

4. Wälzlager nach Anspruch 2, **dadurch gekennzeichnet, dass** der innere Lagerring (6) gegenüber dem äußeren Lagerring (7) eine etwa um die Dicke des radialen Dichtungsschenkels (18) der Lippendichtung (17) reduzierte Axialbreite sowie eine etwa um die Länge der axialen Dichtlippe (21) reduzierte Lagersitzbreite an dessen Innenmantelfläche (22) aufweist.

5. Wälzlager nach Anspruch 4, **dadurch gekennzeichnet, dass** der mit der axialen Dichtlippe (21) der Lippendichtung (17) in Schleifkontakt stehende Teil der Innenmantelfläche (22) des inneren Lagerrings (6) durch eine umlaufende Nut (27) und durch eine zur Axialseite (19) des inneren Lagerrings (6) verlaufende Fase (28) in seiner Breite reibungsreduziert ausgebildet ist.

6. Wälzlager nach Anspruch 5, **dadurch gekennzeichnet, dass** die Lippendichtung (17) an der Innenseite ihres radialen Dichtungsschenkels (18) eine zusätzliche Vordichtlippe (29) aufweist, mit welcher bei Lagerstillstand ein direktes Abtropfen flüssigen Schmierstoffs in die Spaltdichtung (20) zwischen diesem und der Axialseite (19) des inneren Lagerrings (6) vermeidbar ist.

7. Wälzlager nach Anspruch 6, **dadurch gekennzeichnet, dass** in die Außenmantelfläche (11) des inneren Lagerrings (6) unmittelbar vor der Vordichtlippe (29) der Lippendichtung (17) eine zusätzliche Schleudernut (30) eingearbeitet ist, die im Lagerbetrieb eine Abrisskante gegen fliehkraftbedingt in die Spaltdichtung (20) kriechenden Schmierstoff bildet.

## Claims

1. Rolling bearing, in particular single-row deep groove ball bearing for a dual mass flywheel (1) in a motor vehicle, said rolling bearing (5) being composed substantially of an inner bearing ring (6) and of an outer bearing ring (7) arranged coaxially with respect to said inner bearing ring and of a multiplicity of bearing balls (8) which are arranged between said bearing rings (6, 7) and which roll in groove-like raceways (9, 10) in the outer lateral surface (11) of the inner bearing ring (6) and in the inner lateral surface (12) of the outer bearing ring (7) and which are held at uniform intervals from one another in the circumferential direction by a bearing cage (13), wherein the interior space (14) of the rolling bearing (5) is sealed off by two circular-ring-shaped seals (15, 16) situated axially opposite one another and has a lifetime filling of a rolling bearing lubricant, **wherein** at least one of the two seals (15, 16) is designed as an angle-profile-shaped lip seal (17) whose dimensionally stable radial seal leg (18) is fastened to the outer bearing ring (7) and is arranged so as to form a gap seal (20) with an axial side (19) of the inner bearing ring (6), and whose elastic axial sealing lip (21) engages under the inner bearing ring (6) and bears slidingly against the inner lateral surface (22) of the latter, **characterized in that** the elastic axial sealing lip is simultaneously designed as an overpressure valve, by means of which the rolling bearing (5), if an admissible gas pressure in the interior space (14) thereof is exceeded, can be positively ventilated via the gap seal (20) and via the sealing lip (21) which lifts up from the inner lateral surface (22) of the inner bearing ring (6) at least in regions.

2. Rolling bearing according to Claim 1, **characterized in that** only one seal (16) is designed as an angle-profile-shaped lip seal (17), whereas the other seal (15) is formed by a lip sealing ring which is held in an encircling receiving groove (23) in the inner lateral surface (12) of the outer bearing ring (7).

3. Rolling bearing according to Claim 2, **characterized in that** the radial seal leg (18) of the angle-profile-shaped lip seal (17) is stiffened by a metal reinforcement (24) and can be snapped with its free edge section (25) into a further encircling receiving groove (26) in the inner lateral surface (12) of the outer bearing ring (7).

4. Rolling bearing according to Claim 2, **characterized in that**, in relation to the outer bearing ring (7), the inner bearing ring (6) has an axial width which is reduced by approximately the thickness of the radial seal leg (18) of the lip seal (17), and has, on its inner lateral surface (22), a bearing seat width which is reduced by approximately the length of the axial sealing lip (21).

5. Rolling bearing according to Claim 4, **characterized in that** that part of the inner lateral surface (22) of the inner bearing ring (6) which is in sliding contact with the axial sealing lip (21) of the lip seal (17) is designed so as to exhibit reduced friction over its width by means of an encircling groove (27) and by means of a bevel (28) running to the axial side (19) of the inner bearing ring (6).

6. Rolling bearing according to Claim 5, **characterized in that** the lip seal (17) has, on the inner side of its radial seal leg (18), an additional pre-sealing lip (29) by means of which, when the bearing is at a standstill, liquid lubricant can be prevented from directly dripping down into the gap seal (20) between said seal leg and the axial side (19) of the inner bearing ring (6).

7. Rolling bearing according to Claim 6, **characterized in that** an additional centrifugal groove (30) is formed into the outer lateral surface (11) of the inner bearing ring (6) directly in front of the pre-sealing lip (29) of the lip seal (17), which centrifugal groove, during bearing operation, forms a separation edge to prevent lubricant from creeping into the gap seal (20) under centrifugal force.

## Revendications

1. Palier à roulement, en particulier palier rainuré à billes à une rangée de billes pour un volant à deux masses (1) dans un véhicule automobile, lequel palier à roulement (5) est constitué essentiellement d'une bague de palier intérieure (6) et d'une bague de palier extérieure (7) disposée de manière coaxiale par rapport à celle-ci ainsi que d'une pluralité de billes de palier (8) disposées entre ces bagues de palier (6, 7), lesquelles billes de palier roulent dans des chemins de roulement (9, 10) en forme de rainure dans la surface d'enveloppe extérieure (11) de la bague de palier intérieure (6) et dans la surface d'enveloppe intérieure (12) de la bague de palier extérieure (7), et sont maintenues à des intervalles réguliers les unes des autres dans la direction périphérique par une cage de palier (13), l'espace intérieur (14) du palier à roulement (5) étant rendu étanche par deux joints d'étanchéité (15, 16) de forme annulaire circulaire axialement opposés l'un à l'autre, et comprenant un remplissage à vie de lubrifiant de palier à roulement, au moins l'un des deux joints d'étanchéité (15, 16) étant réalisé sous forme de joint d'étanchéité à lèvre (17) en forme de profilé coudé dont la branche radiale de joint d'étanchéité (18) à stabilité de forme est fixée à la bague de palier extérieure (7) et est disposée de manière à former, conjointement avec une face axiale (19) de la bague de palier intérieure (6), un joint d'étanchéité à fente (20), et dont la lèvre d'étanchéité (21) axiale élastique est disposée de manière à venir en prise par le dessous avec la bague de palier intérieure (6) et de manière à s'appliquer de manière glissante contre la surface d'enveloppe intérieure (22) de celle-ci, **caractérisé en ce que** la lèvre d'étanchéité axiale élastique est réalisée en même temps sous forme de soupape de surpression au moyen de laquelle le palier à roulement (5) peut être ventilé de manière forcée, lorsqu'une pression de gaz admissible dans son espace intérieur (14) est dépassée, par le biais du joint d'étanchéité à fente (20) ainsi que par le biais de la lèvre d'étanchéité (21) se soulevant en l'occurrence au moins localement de la surface d'enveloppe intérieure (22) de la bague de palier intérieure (6).

2. Palier à roulement selon la revendication 1, **caractérisé en ce que** seulement un joint d'étanchéité (16) est réalisé sous forme de joint d'étanchéité à lèvre (17) en forme de profilé coudé, tandis que l'autre joint d'étanchéité (15) est formé par une bague d'étanchéité à lèvre maintenue dans une rainure de réception périphérique (23) dans la surface d'enveloppe intérieure (12) de la bague de palier extérieure (7).

3. Palier à roulement selon la revendication 2, **caractérisé en ce que** la branche radiale de joint d'étanchéité (18) du joint d'étanchéité à lèvre (17) en forme de profilé coudé est rigidifiée par une armature métallique (24) et peut être encliquetée par sa partie de bord libre (25) dans une autre rainure de réception périphérique (26) dans la surface d'enveloppe intérieure (12) de la bague de palier extérieure (7).

4. Palier à roulement selon la revendication 2, **caractérisé en ce que** la bague de palier intérieure (6) présente, par rapport à la bague de palier extérieure (7), une largeur axiale réduite d'approximativement l'épaisseur de la branche radiale de joint d'étanchéité (18) du joint d'étanchéité à lèvre (17) et présente, au niveau de sa surface d'enveloppe intérieure (22), une largeur de logement de palier réduite approximativement de la longueur de la lèvre d'étanchéité axiale (21).

5. Palier à roulement selon la revendication 4, **caractérisé en ce que** la partie de la surface d'enveloppe intérieure (22) de la bague de palier intérieure (6) en contact glissant avec la lèvre d'étanchéité axiale (21) du joint d'étanchéité à lèvre (17) est réalisée de manière à présenter une friction réduite sur sa largeur au moyen d'une rainure périphérique (27) et au moyen d'un chanfrein (28) s'étendant vers la face axiale (19) de la bague de palier intérieure (6).

6. Palier à roulement selon la revendication 5, **caractérisé en ce que** le joint d'étanchéité à lèvre (17) comprend sur la face intérieure de sa branche radiale de joint d'étanchéité (18) une lèvre de pré-étanchéité supplémentaire (29) à l'aide de laquelle un égouttage direct de lubrifiant liquide dans le joint d'étanchéité à fente (20) entre cette branche radiale de joint d'étanchéité et la face axiale (19) de la bague de palier intérieure (6) peut être évité lorsque le palier est au repos.

7. Palier à roulement selon la revendication 6, **caractérisé en ce qu'**une rainure centrifuge supplémentaire (30) est ménagée dans la surface d'enveloppe extérieure (11) de la bague de palier intérieure (6) directement devant la lèvre de pré-étanchéité (29) du joint d'étanchéité à lèvre (17), laquelle rainure centrifuge forme lors du fonctionnement du palier une arête de séparation pour empêcher le lubrifiant de pénétrer dans le joint d'étanchéité à fente (20) sous l'effet de la force centrifuge.
